Europäisches Patentamt

European Patent Office

Office européen des brevets

(11) Publication number: **0 113 212**
**B1**

# EUROPEAN PATENT SPECIFICATION

(45) Date of publication of patent specification: **27.08.86**

(51) Int. Cl.⁴: **F 16 D 13/71, F 16 D 21/06**

(21) Application number: **83307526.0**

(22) Date of filing: **09.12.83**

(54) Clutch cover assembly.

(30) Priority: **11.12.82 GB 8235391**

(43) Date of publication of application:
**11.07.84 Bulletin 84/28**

(45) Publication of the grant of the patent:
**27.08.86 Bulletin 86/35**

(84) Designated Contracting States:
**AT BE CH DE FR GB IT LI LU NL SE**

(56) References cited:
**DE-A- 599 774**
**FR-A-2 213 432**
**US-A-2 183 001**
**US-A-2 232 848**
**US-A-2 724 475**

(73) Proprietor: **Laycock Engineering Limited
Archer Road
Millhouses Sheffield S8 0JY (GB)**

(72) Inventor: **Fulford, Gary
11 Hunterhouse Road
Hunter's Bar Sheffield (GB)**

(74) Representative: **Dodd, Graham Marshall et al
Guest Keen and Nettlefolds plc Group Patents
and Licensing Department P.O. Box 55 Ipsley
House Ipsley Church Lane
Redditch Worcestershire B98 0TL (GB)**

Courier Press, Leamington Spa, England.

# Description

This invention relates to friction clutches. More particularly, the invention relates to a cover assembly for a friction clutch, comprising a cover member adapted to be connected to a flywheel of a prime mover, a pressure plate, spring means operative between the cover member and pressure plate, and a plurality of clutch release levers pivotally connected to the cover member and connected to the pressure plate. When such a cover assembly is installed, a driven plate is clamped between the pressure plate and flywheel or other driving plate member by the action of the spring means, and the pressure plate is withdrawn against the action of the spring means when the release levers are moved by a release mechanism.

In such clutch cover assemblies, it is usual for the connection between each of the release levers and the pressure plate to be established by a link or links, pivotally connected to the release lever and to the pressure plate. However, this construction is relatively complex, heavy and expensive, and tends to develop undesirable lost motion when worn. It has also been proposed, for example in US—A—2 232 848 or 2 724 475, or FR—A—2 213 432, that a clip or an element of sheet material can be used to establish the required connection between release lever and pressure plate. However, such arrangements are complex and expensive. It is one object of the present invention to overcome or reduce such disadvantages.

A further problem which can occur with clutch cover assemblies is that centrifugal force acting on the release levers at high rotational speeds can have a noticeable effect, either increasing or reducing, on the pressure plate load. The effect will vary as the release levers pivot on the cover member, and may change from assisting to opposing the action of the spring means on the pressure plate over the operative range of movement of the release levers. It is a further object of the invention to provide for reduction or elimination of this problem.

The invention provides a cover assembly for a friction clutch, comprising a cover member adapted to be connected to a flywheel of a prime mover a pressure plate, spring means operative between the cover member and pressure plate, and a plurality of clutch release levers pivotally connected to the cover member and connected to the pressure plate, characterised in that the connection between each release lever and the pressure plate is provided by a flexible element rigidly connected to said release lever and pressure plate.

By use of flexible elements each rigidly connected to a release lever and the pressure plate, the problem of wear, above referred to, is overcome. Such flexible elements are simple in form, providing a cost saving in comparison with complex clips or pivoted linkages.

Since each element is deformed during pressure plate withdrawal, this gives the possibility of arranging for the force exerted by the elements to counter the effect of centrifugal force on the release levers. The elements may be arranged such that they are substantially unstressed (in the bending mode) when the clutch is in one operative condition e.g. the engaged condition, although some residual stress may assist in preventing rattle of parts of the clutch release mechanism in such condition.

Each of said flexible elements may comprise a strip of a resilient material e.g. spring steel.

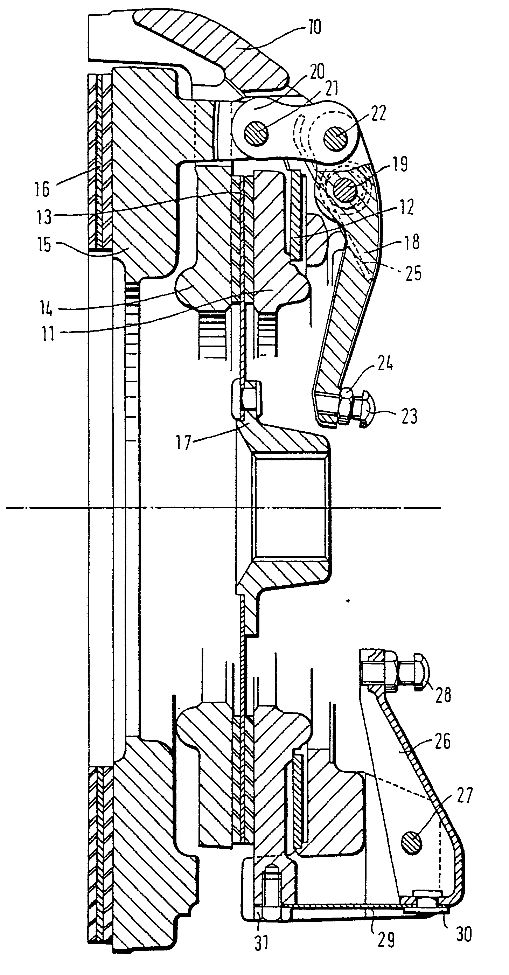

These and other features and advantages of the invention will now be described with reference to the accompanying drawing, which is a section through a clutch cover assembly according to the invention.

The illustrated clutch cover assembly is one which comprises two independently operable clutch sections, each with its own pressure plate, spring means and release levers. Such an assembly is used, for example, in a tractor where one clutch section is to drive the normal gear box for driving the tractor, while the other is for controlling a power take off shaft.

The illustrated assembly comprises a clutch cover member 10 which is a casting and is adapted to be secured by means not shown to a flywheel of a prime mover. The cover member 10 contains a first pressure plate 11, which is biased to the left of the drawing by a belville spring 12 abutting the first pressure plate 11 and the cover member. The first pressure plate 11 clamps a first friction plate 13 between itself and a driving plate member 14 integral with the cover member. The cover member also contains a second pressure plate 15 which is biased by a spring means not shown to clamp a second friction plate 16 between itself and the flywheel of the prime mover. The first friction plate 13 has a splined hub 17 to engage an output shaft, not shown, which would in the form of a sleeve surrounding a further output shaft, also not shown, which would engage with a similar splined hub of the friction plate 16. In a typical installation, the clutch section with the first pressure plate 11 and first friction plate 13 would be for the power take off of a tractor while the clutch section comprising pressure plate 15 and friction plate 16 would be for the main drive of the tractor.

The cover member 10 carries three circumferentially spaced radially disposed release levers one of which is shown at 18, for withdrawing pressure plate 15 against the action of its spring means. Each release lever 18 is pivoted to the cover member by a pin 19 towards its radially outermost end, and connected at its outermost end to the pressure plate 15 by a link 20 and pins 21, 22. At this innermost end, the release lever 18 carries an adjustable tappet 23 with a lock nut 24, for engagement by a release ring, not shown. A relatively light spring 25 provides a biasing force to the release lever 18 to take up lost motion which inevitably is present in its connection with pressure plate 15 by way of link 20 and pins 21, 22.

A further set of three circumferentially spaced release levers is provided for independent withdrawal of the pressure plate 11 against the action of its spring 12. One of these levers is shown at 26, and it comprises a pressing pivoted to the cover member at 27 and provided at its radially innermost end with an adjustable tappet 28 for engagement by another release ring, not shown. The connection between the release lever 26 and pressure plate 11 is provided by a spring steel strip 29, secured at one end to the lever by a rivet 30 and at the other end to the pressure plate 11 by a bolt 31.

Because the connection between the release lever 26 and pressure plate 11 by the spring steel strip 29 does not involve an additional link and pivot pins, there is no tendency for lost motion to develop with wear. Thus there is no need for a spring 25 as is shown in association with release lever 18. Further, the strip 29 will resist bending, and thereby prevent any tendency for release lever 26 to move angularly about its pivot 27 under centrifugal effects, which would otherwise tend to alter the force with which friction plate 13 is clamped by the pressure plate 11.

As illustrated, the connection between each release lever 26 and pressure plate 11 is provided by a single strip 29. If required, a plurality of such strips could be used, possibly in the form of a laminate.

It will be appreciated that although the invention has been described in relation to one section of a clutch including two sections for a main drive and a power take off, the invention is applicable to clutches generally, whether of multiple or single type.

## Claims

1. A cover assembly for a friction clutch, comprising a cover member (10) adapted to be connected to a flywheel of a prime mover, a pressure plate (11), spring means (12) operative between the cover member (10) and pressure plate (11), and a plurality of clutch release levers (26) pivotally connected to the cover member (10) and connected to the pressure plate (11), characterised in that the connection between each of release levers (26) and the pressure plate (11) is provided by a flexible element (29) rigidly connected to said release lever (26) and pressure plate (11).

2. A clutch cover assembly according to claim 1 further characterised in that said flexible element comprises a strip (29) of resilient material.

3. A clutch cover assembly according to claim 1 or claim 2 further characterised in that said material is spring steel.

4. A clutch cover assembly according to claim 2 or claim 3 further characterised in that each of said elements (29) is substantially unstressed when in a position corresponding to the engaged condition of the clutch.

## Patentansprüche

1. Deckelbaueinheit für eine Reibungskupplung, bestehend aus einem mit dem Schwungrad einer Antriebsmaschine verbindendbaren Deckelkörper (10), einer Druckplatte (11), zwischen dem Deckelkörper (10) und der Druckplatte (11) wirkenden Federmitteln (12) und einer Mehrzahl von Kupplungsausrückhebeln (26), die schwenkbar mit dem Deckelkörper (10) verbunden und mit der Druckplatte (11) verbunden sind, dadurch gekennzeichnet, dass zu Verbindung zwischen jedem der Ausrückhebel (26) und der Druckplatte (11) ein elastisches Element (29) vorgesehen ist, das an dem Ausrückhebel (26) und der Druckplatte (11) starr befestigt ist.

2. Deckelbaueinheit nach Anspruch 1, dadurch gekennzeichnet, dass das genannte elastische Element aus einem Streifen (29) elastischen Werkstoffs besteht.

3. Deckelbaueinheit nach Anspruch 1 oder 2, dadurch gekennzeichnet, dass der Werkstoff Federstahl ist.

4. Deckelbaueinheit nach Anspruch 2 oder 3, dadurch gekennzeichnet, dass sich jedes der Elemente (29) im wesentlichen in ungespanntem Zustand befindet, wenn es sich in einer Stellung befindet, die dem eingerückten Zustand der Kupplung entspricht.

## Revendications

1. Couvercle d'embrayage à friction, comprenant un organe (19) formant couvercle destiné à être raccordé à un volant d'un moteur, une plaque de pression (11), un dispositif à ressort (12) agissant entre l'organe formant couvercle (10) est la plaque de pression (11), et plusieurs leviers de débrayage (26) articulés sur l'organe formant couvercle (10) et raccordés à la plaque de pression (11), caractérisé en ce que la connexion entre chaque levier de débrayage (26) et la plaque de pression (11) est assurée par un élément flexible (29) raccordé rigidement au levier de débrayage (26) et à la plaque de pression (11).

2. Couvercle d'embrayage selon la revendication 1, caractérisé en outre en ce que l'élément flexible est une bande (29) d'un matériau élastique.

3. Couvercle d'embrayage selon l'une des revendications 1 et 2, caractérisé en ce que ledit matériau est l'acier à ressort.

4. Couvercle d'embrayage selon l'une des revendications 2 et 3, caractérisé en ce que chacun desdits éléments (29) n'est pratiquement pas sous contrainte lorsqu'il est dans une position correspondant à la position embrayée de l'embrayage.